## Europäisches Patentamt

(19) **European Patent Office**

**Office européen des brevets**

(11) Veröffentlichungsnummer: **0 099 024**
**B1**

(12) # EUROPÄISCHE PATENTSCHRIFT

(45) Veröffentlichungstag der Patentschrift:
**03.08.88**

(51) Int. Cl.⁴: **G 01 N 21/47**

(21) Anmeldenummer: **83106310.2**

(22) Anmeldetag: **29.06.83**

(54) **Verfahren und Vorrichtungen zum Messen von Remissionen.**

(30) Priorität: **14.07.82 DE 3226372**

(43) Veröffentlichungstag der Anmeldung:
**25.01.84 Patentblatt 84/4**

(45) Bekanntmachung des Hinweises auf die Patenterteilung:
**03.08.88 Patentblatt 88/31**

(84) Benannte Vertragsstaaten:
**AT BE CH DE FR GB IT LI NL SE**

(56) Entgegenhaltungen:
**EP - A - 0 032 774**
**EP - A - 0 037 484**
**US - A - 4 189 335**

**IBM TECHNICAL DISCLOSURE BULLETIN, Band 23, Nr. 7B, Dezember 1980, Seite 3133, New York, USA; R.W. HARRISON: "Adapter for standardizing readings obtained from different microreflectometers" idem.**
**APPLIED OPTICS, Band 21, Nr. 19, Oktober 1982, Seiten 3531-3535, New York; USA; P.C.F. BORSBOOM et al.: "Fiber-optic scattering monitor for use with bulk opaque material"**

(73) Patentinhaber: **Bayer Diagnostic GmbH,
Weissenseestrasse 101, D-8000 München 90 (DE)**

(72) Erfinder: **Barry, Jürgen, Perlacher Strasse 30,
D-8000 München 90 (DE)**

(74) Vertreter: **Kirchner, Dietrich, Dr. et al, c/o BAYER AG
Konzernverwaltung RP Patentabteilung,
D-5090 Leverkusen, Bayerwerk (DE)**

## Beschreibung

Die Erfindung betrifft ein Verfahren zum Messen von Remissionen, die vom Messfeld einer remittierenden Fläche remittiert werden, wobei sich die Strahlenbündel von mehr als einem Sender auf dem Messfeld wenigstens teilweise überlagern und ein Empfänger ein Teilbündel des remittierten Strahlenbündels aufnimmt. Ferner betrifft die Erfindung eine Vorrichtung zur Durchführung dieses Messverfahrens, mit mindestens zwei Sendern und mit einem Empfänger, wobei die Sender im wesentlichen symmetrisch hinsichtlich einer Ebene, in der die Empfangsstrahlenbündelachse liegt, angeordnet sind und wobei sich die Strahlenbündel der Sender wenigstens teilweise überlagern.

Remissionsmessungen sind dafür vorgesehen, die Remissionen von lichtremittierenden Flächen zu messen, um Remissionswerte oder -veränderungen zu ermitteln und quantitativ zu erfassen. Messungen dieser Art und damit korrekte Messergebnisse hängen sehr stark vom Abstand der Remissionsfläche bzw. des Messfelds von der Sender- und/oder Empfängerfläche ab. Da die gemessene Intensität des Remissionsstrahls und damit das Messergebnis in sehr kritischer Weise vom Abstand der Remissionsmessfläche bzw. des Messfelds von der Sender- und/oder Empfängerfläche abhängt, ist es bei den herkömmlichen Verfahren und Vorrichtungen zur Remissionsmessung von grosser Bedeutung, dass die zu messende Fläche bzw. das Messfeld sehr genau reproduzierbar vom Empfänger und/oder Sender beabstandet ist. Bei einem aus der DE-A-3 011 223 bekannten Remissionsphotometer werden sehr aufwendige Einrichtungen verwendet, um den Abstand zwischen dem Messfeld und dem Empfänger bzw. dem Sender konstant zu halten bzw. genau reproduzierbar zu machen. Die Bedienung einer solchen bekannten Vorrichtung ist sehr kompliziert und nur von geübten Personen durchführbar, wobei dennoch die Gefahr von falschen Messergebnissen gross ist.

Aus der EP-A-20 032 774, der US-A-4 189 335 und IBM Techn. Discl. Bull., 23 (1980) 7B, S. 3133 New York, USA, sind Reflexions-Messverfahren bzw. optische Reflektometer bekannt, bei denen mehr als ein Sender angeordnet sind, wobei sich die Strahlenbündel der Sender auf dem Messfeld wenigstens teilweise überlagern. Diese Massnahme dient entweder der Forderung, reproduzierbare Reflexionsmessungen an durchsichtigen Materialien mit sehr kleinen Flächen vorzunehmen, oder Reflexionsmessungen an Teppichmaterialien zur Bestimmung der Beschichtungszusammensetzung durchzuführen bzw. reproduzierbare Messergebnisse auch dann zu erhalten, wenn die zu messende Oberfläche unterschiedliche Glanz- und Streumuster aufgrund der Oberflächenstruktur aufweist.

Der Erfindung liegt eine andere Aufgabe zugrunde, nämlich ein Verfahren und eine Vorrichtung für Remissionsmessungen anzugeben bzw. zu schaffen, mit der bzw. mit denen einwandfrei Remissionsmessergebnisse auf einfache Weise und ohne hohen Geräteaufwand erzielt werden können, ohne dass ein genauer und reproduzierbarer Abstand zwischen Sender und/oder Empfänger einerseits und dem Messfeld andererseits eingehalten zu werden braucht.

Diese Aufgabe wird, ausgehend von dem eingangs beschriebenen Verfahren, erfindungsgemäss dadurch gelöst, dass sich die Strahlenbündel der Sender auf dem Messfeld derart überlagern, dass in einem bestimmten Arbeitsbereich des Abstands zwischen dem Messfeld einerseits und den Sendern bzw. dem Empfänger andererseits die vom Empfänger aufgenommene Intensität im wesentlichen unabhängig vom genannten Abstand ist.

Der vorliegenden Erfindung liegt folgende Erkenntnis zugrunde:

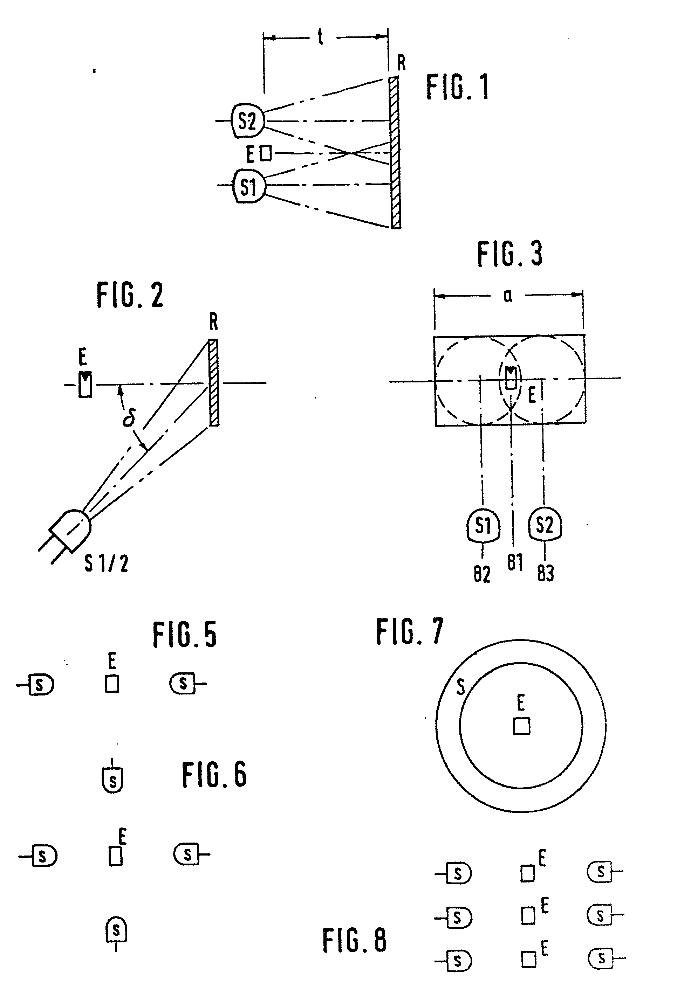

In den Figuren 1, 2 und 3 ist eine Anordnung, die aus einem Empfänger und zwei Sendern S1 und S2 besteht, in den drei Ansichten dargestellt, wobei die Sender S1 und S2 jeweils in gleichem Abstand vom Empfänger und symmetrisch zu diesem angeordnet sind. In Fig. 4 ist auf der Abszisse die geometrische Anordnung von Empfänger und Sender gemäss Fig. 3 nochmals dargestellt, wobei mit dem Bezugszeichen 81 die Empfangsstrahlenbündelachse und mit dem Bezugszeichen 82 und 83 die Sendestrahlenbündelachse der beiden Sender S1 und S2 bezeichnet sind. Auf der Ordinate sind die Empfangs- bzw. Beleuchtungspegel aufgetragen. Die Kurve 84 gibt die Beleuchtungscharakteristik bzw. -pegelverteilung wieder, die durch Überlagerung (Addition) der Beleuchtungskurven der beiden Sender S1 und S2 gebildet wird. Die Empfangscharakteristik bzw. pegelverteilung des Empfängers E ist mit dem Bezugszeichen 85 versehen.

Die Kurven 84 und 85 stellen die Beleuchtungs- bzw. Empfangscharakteristik bei einem Abstand t der Remissionsmessfläche R dar, wie dies aus Figur 1 zu ersehen ist. Durch Zusammensetzen dieser beiden Charakteristiken 84 und 85 ergibt sich eine Gesamtcharakteristik 86, in dem die Werte der Beleuchtungs- und Empfangscharakteristik 84 und 85 an jedem Punkt auf der Abszisse multipliziert werden. Die Charakteristiken 84, 85 und 86 ergeben sich für einen optimalen Abstand $t_{opt}$ der Remissionsmessfläche R von den Sendern S1 und S2 und/oder vom Empfänger E.

Wenn die Remissionsmessfläche R bzw. das Messfeld von der Sender- und/oder Empfängerebene in einem anderen Abstand t als dem optimalen Abstand $t_{opt}$ liegt, ändern sich auch die Gesamtcharakteristiken in ihrer Form.

Ist der Abstand t des Messfeldes R von der Sender- und/oder Empfängerebene kleiner als der optimale Abstand $t_{opt}$, so ergibt sich für diesen Fall eine stärkere Einbuchtung in der Mitte der Beleuchtungscharakteristik 84 aufgrund des kleineren Abstands. Darüber hinaus ergibt sich für $t < t_{opt}$ eine kleinere Beleuchtungs-Gesamtintensität aufgrund dieser Formänderung der Beleuchtungscharakteristik 84.

Im umgekehrten Fall, wenn $t > t_{opt}$ ist, weist die Beleuchtungscharakteristik 84 eine geringere Einbuchtung auf. Darüber hinaus ergibt sich für $t > t_{opt}$ eine grössere Beleuchtungs-Gesamtintensität aufgrund dieser Formänderung der Beleuchtungscharakteristik 84.

Eine vom Empfänger gemessene Intensität ist bei kleinerem Abstand t als dem optimalen Abstand $t_{opt}$ des Messfeldes R von der Sender- und/oder Empfängerebene grösser, und umgekehrt. D.h., hinsichtlich der Beleuchtungsgesamtintensität ist die vom Empfänger gemessene Intensität bei sich änderndem Abstand des Messfeldes R von der Sender- und/oder Empfängerebene gegenläufig.

Insgesamt ergibt sich für $t < t_{opt}$ eine Gesamtcharakteristik 87 mit einer Einbuchtung in der Mitte und für $t > t_{opt}$ eine Gesamtcharakteristik 88 mit einer Wölbung nach oben.

Vergleicht man jedoch die Flächenintegrale der Gesamtcharakteristiken 86, 87 und 88 für die genannten Fälle, so zeigt sich, dass diese für die unterschiedlichen Abstände des Messfeldes von der Sender- und/oder Empfängerebene im wesentlichen gleich sind. Der Empfänger misst also für die unterschiedlichen Abstände des Messfeldes von der Sender- und/oder Empfängerebene im wesentlichen dieselbe Intensität; d.h. ein Unterschied des Abstands zwischen dem Messfeld R und der Sender- und/oder Empfängerebene geht zumindest in einen bestimmten Arbeitsbereich des Abstands t nicht bzw. nur in unwesentlicher Weise in das Messergebnis ein. Mit anderen Worten, das Messergebnis ist im wesentlichen unabhängig vom Abstand des Messfeldes hinsichtlich der Sender- und/oder Empfängerebene.

Wie dargestellt, ergibt sich dieser Tiefenausgleich durch die erfindungsgemässe Verwendung von zwei Sendern in Zusammenhang mit einem Empfänger.

Die Anordnung der beiden Sender hinsichtlich des Empfängers muss nicht unbedingt symmetrisch sein. Bei einer unsymmetrischen Anordnung der Sender und Empfänger erhält man unsymmetrische Beleuchtungs- und Empfangscharakteristiken und damit auch unsymmetrische Gesamtcharakteristiken.

Gemäss einer bevorzugten Ausführungsform der Erfindung werden die Sender S1 und S2 jeweils symmetrisch, d.h. in gleichem Abstand vom Empfänger angeordnet, wodurch die in Figur 4 dargestellte symmetrische Ausbildung der Charakteristiken entsteht.

Eine besonders geeignete Vorrichtung zur Durchführung des erfindungsgemässen Messverfahrens beruht auf mindestens zwei Sendern und einem Empfänger, wobei die Sender im wesentlichen symmetrisch hinsichtlich einer Ebene, in der die Empfangsstrahlenbündelachse liegt, angeordnet sind und wobei sich die Strahlenbündel der Sender wenigstens teilweise überlagern. Erfindungsgemäss ist diese Vorrichtung dadurch charakterisiert, dass die Sender derart angeordnet und ausgebildet sind, dass sich die Strahlenbündel der Sender auf dem Messfeld in der Weise überlagern, dass in einem bestimmten Arbeitsbereich des Abstandes zwischen dem Messfeld einerseits und den Sendern bzw. dem Empfänger andererseits die vom Empfänger aufgenommene Intensität im wesentlichen unabhängig vom genannten Abstand ist.

Gemäss einer bevorzugten Ausführungsform der Erfindung weisen die Senderstrahlachsen zur Empfangsstrahlachse jeweils einen Winkel von $0 < \alpha \leq 90°$ auf. Vorzugsweise sind die Winkel $\alpha$ gleich gross, so dass eine Winkelsymmetrie vorhanden ist. Es ist jedoch auch möglich, unterschiedliche Winkel für die Senderstrahlachsen zu wählen.

Gemäss einer weiteren bevorzugten Ausführungsform der erfindungsgemässen Vorrichtung sind die Sender ringförmig um die Empfangsstrahlachse angeordnet. Die Zahl der Sender ist dabei frei wählbar, wobei der Abstand der Sender untereinander vorzugsweise gleich ist. Je mehr Sender ringförmig um die Empfangsachse angeordnet sind, desto weniger machen sich Struktureinflüsse der Probe (z.B. bei Textilien) bemerkbar. Daher ist eine Ausführungsform der Erfindung besonders vorteilhaft, bei der statt der einzelnen Sender ein ringförmiger Sender verwendet wird, der im wesentlichen achssymmetrisch um die Empfangsstrahlenbündelachse angeordnet ist.

Vorteilhaft ist es auch, statt einer achssymmetrischen Anordnung der Sender diese hinsichtlich einer Ebene, in der die Empfangsstrahlenbündelachse liegt, im wesentlichen symmetrisch anzuordnen.

Gemäss einer bevorzugten Ausführungsform weisen die Senderstrahlenbündelachsen zur Empfängerstrahlenbündelachse jeweils einen im wesentlichen gleichen Winkel von $0 < \alpha \leq 90°$ auf.

Eine besonders vorteilhafte Ausführungsform besteht auch darin, dass die Senderstrahlenbündelachsen zueinander im wesentlichen parallel sind und zur Empfangsstrahlenbündelachse einen Winkel von $0 < \alpha \leq 90°$ aufweisen.

Wenn eine langgestreckte Probe ausgemessen werden soll, ist weiter vorgesehen, wenigstens zwei Empfänger mit jeweils zwei dazu symmetrisch angeordneten Sendern vorzusehen, wobei die Empfänger in einer Ebene angeordnet sind. Je nach den gegebenen Voraussetzungen und Forderungen im Einzelfall empfängt der jeweilige Empfänger nur Strahlung von den ihm zugeordneten Sendern, oder von Sendern, die benachbarten Empfängern zugeordnet sind.

Die erfindungsgemässe Aufgabe lässt sich auch mit Vorrichtungen lösen, bei denen die Sender lagemässig durch die Empfänger und umgekehrt ausgetauscht sind. Im Falle der zuvor erwähnten Vorrichtung, bei der zwei Sender jeweils symmetrisch zu einem Empfänger angeordnet sind, würde dies bedeuten, dass zwei Empfänger jeweils symmetrisch zu einem Sender angeordnet sind. Die der vorliegenden Erfindung zugrundeliegenden Voraussetzungen gelten auch für diese Fälle, die jedoch nicht von den Patentansprüchen umfasst werden.

Das erfindungsgemässe Verfahren und die erfindungsgemässen Vorrichtungen sind sowohl in Zusammenhang mit Schallmessungen, als auch in Zusammenhang mit elektromagnetischer Strahlenmessung, einschliesslich von Lichtmessungen, verwendbar.

Die Erfindung wird nachstehend anhand der Zeichnungen für die Anwendung von Lichtremissionsmessungen beispielsweise näher erläutert. Es zeigen:

Fig. 1 die schematische Darstellung einer Anordnung mit einem Empfänger und zwei Sendern in Aufsicht,

Fig. 2 und 3 die in Figur 1 dargestellte Anordnung in Seitenansichten,

Fig. 4 Kurvenverläufe zur Erläuterung der Erfindung,

Fig. 5 eine Anordnung in Aufsicht, bei der zwei Sender achssymmetrisch um einen Empfänger angeordnet sind,

Fig. 6 eine Anordnung in Aufsicht, bei der vier Sender achssymmetrisch um einen Empfänger angeordnet sind,

Fig. 7 eine schematische Darstellung, bei dem ein ringförmiger Sender um einen Empfänger dargestellt ist,

Fig. 8 eine Reihenanordnung von mehreren in Figur 1 dargestellten Anordnungen zur Remissionsmessung länglicher Messfelder oder Proben,

Fig. 9 bis 11 eine Ausführungsform entsprechend den Figuren 1 bis 3 mit Lichtleitern in verschiedenen Ansichten,

Fig. 12 die Abhängigkeit des Empfangspegels vom Abstand des Messfeldes bezüglich der Sender- und Empfangsebene für die in den Figuren 9 bis 11 dargestellten Ausführungsformen.

Wie bereits erwähnt, zeigen die Figuren 1 bis 3 die Ausführungsform der erfindungsgemässen Vorrichtung mit nur einem Empfänger und zwei Sendern, die hinsichtlich einer Ebene, in der die Empfangsstrahlenbündelachse liegt, symmetrisch angeordnet sind. Eine Seitenansicht der in Fig. 1 dargestellten Anordnung ist in Figur 3 dargestellt, aus der die Überlappung der Senderpegel auf der Remissionsfläche ersichtlich ist. Mit t ist der Abstand der Remissionsfläche R gegenüber der Sender- bzw. der Empfängerebene bezeichnet. In diesem Zusammenhang sei darauf hingewiesen, dass die Empfangsebene nicht notwendigerweise mit der Senderebene zusammenfallen muss. Es sind Ausführungen denkbar, bei denen die Empfängerebene von der Remissionsfläche R näher oder weiter beabstandet ist als die Senderebene.

Figur 4 dient der Erläuterung der prinzipiellen Wirkungsweise der vorliegenden Erfindung und wurde bereits erläutert.

Figur 5 zeigt eine einfache Ausführungsform mit zwei Sendern und einem Empfänger, um den die beiden Sender im wesentlichen achssymmetrisch angeordnet sind.

In Figur 6 ist ein Empfänger E dargestellt, der von vier Sendern im wesentlichen achssymmetrisch zum Empfangsstrahl umgeben ist. Selbstverständlich ist es auch möglich, mehr als vier Sender achssymmetrisch um den Empfänger anzuordnen.

Eine besonders vorteilhafte Ausführungsform zeigt Figur 7, bei dem ein ringförmiger Sender achssymmetrisch um einen Empfänger angeordnet ist. Ein ringförmiger Sender hat den Vorteil, dass keine Ausrichtung der einzelnen Sender zueinander erforderlich ist, so dass eine sehr einfache und dennoch wirkungsvolle Messanordnung geschaffen werden kann, bei der Struktureinflüsse, wie sie z.B. an Textilien auftreten, eliminiert werden.

Insbesondere bei der Remissionsmessung an langen Proben, wie dies beispielsweise bei Teststreifen in der Medizintechnik der Fall ist, hat sich die in Figur 8 dargestellte Anordnung bewährt, bei der mehrere Empfänger in einer Reihe angeordnet sind, denen jeweils zwei Sender zugeordnet sind. Die einzelnen Sender können auch in Form einer Senderröhre auf jeweils beiden Seiten der Empfänger ausgebildet sein, wodurch sich die Zahl der einzelnen Sender verringert und damit eine einfachere und kostengünstigere Messvorrichtung ergibt. In bestimmten Anwendungsfällen, können auch die in einer Reihe liegenden Empfänger als eine Empfangsröhre ausgebildet sein.

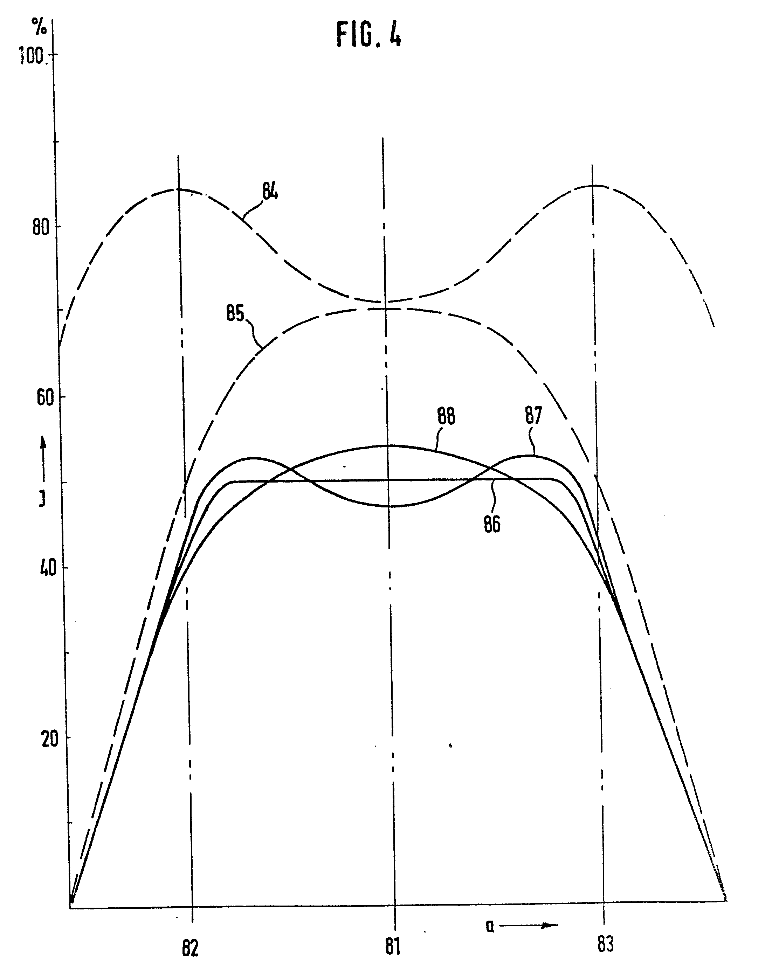

Die Figuren 9 bis 11 zeigen ein Ausführungsbeispiel für die in den Figuren 1 bis 3 angegebene schematische Anordnung unter Verwendung von Lichtleitern. Dieses Ausführungsbeispiel ist insbesondere für die Remissionsmessung vorgesehen, bei der der Senderlichtstrahl in einem Winkel $\delta$ von 45° auf die remittierende Fläche auftritt und der remittierende Lichtstrahl von der Remissionsebene senkrecht auf den Empfangslichtleiter Em trifft (sogenannte 45°–0°-Messanordnung). Die Sende- und Empfangslichtleiter Se, Em sind in Sandwichbauweise angeordnet, wodurch sich ein besonders kompakter und raumsparender Aufbau ergibt.

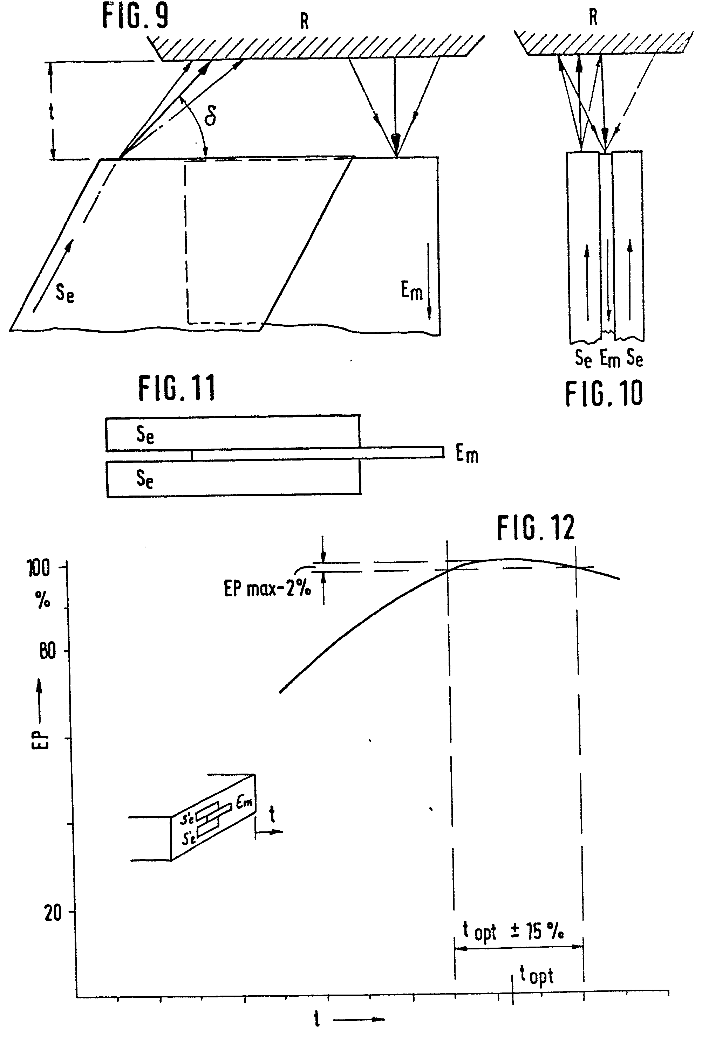

In Figur 12 ist die Abhängigkeit des Empfangslichtpegels EP vom Abstand t des Messfeldes bezüglich der Sender- bzw. Empfängerebene für die Anordnung nach Fig. 9 bis 11 dargestellt. Auf der Abszisse ist mit $t_{opt}$ der Abstand des Messfeldes von der Sender- bzw. Empfängerebene eingezeichnet, bei der der grösste Empfangspegel $EP_{max}$ gemessen wird. Bei einer Versetzung des Messfeldes um ± 15% von der optimalen Entfernung $t_{opt}$ ergibt sich eine Abweichung des Empfangspegels $EP_{max}$. Daraus wird unmittelbar deutlich, dass das Messergebnis innerhalb eines relativ breiten Abstandsbereichs sich nur unwesentlich ändert. D.h. mit der erfindungsgemässen Messvorrichtung ist ein Tiefenausgleich möglich und das Remissionsergebnis hängt in einem weiten Abstandsbereich nicht mehr vom genauen Abstand des Messfeldes bezüglich der Empfängerbzw. Senderebenen ab. Dadurch ist es auch nicht nötig, bei den einzelnen Messungen den Abstand zwischen der Empfänger- und Sendeebene und der Testfeldoberfläche genau reproduzierbar einhalten zu müssen. Die Probe kann auch verschiedene Dicken oder Verwerfungen aufweisen, ohne dass dadurch das Messergebnis beeinflusst wird. Dieser Sachverhalt ist insbesondere bei Remissionsmessungen an medizinischen Teststreifen von grossem Vorteil, da mit ein und demselben Remissionsmessgerät verschiedene Teststreifen unterschiedlicher Dicke ausgemessen werden können ohne dass dadurch das Messergebnis beeinflusst wird.

Die erfindungsgemässe Remissionsmessvorrichtung ist insbesonders auch bei der Remissionsmessung an bandförmigen, am Remissionsmesskopf vorbeilaufenden Materialien, etwa in der Papier- und Textilindustrie vorteilhaft, da nicht mehr auf eine genaue Beabstandung des Messgutes vom Messkopf Wert gelegt zu werden braucht.

Die Erfindung wurde anhand von bevorzugten Ausführungsbeispielen und in Zusammenhang mit speziellen Anwendungsformen beschrieben. Dem Fachmann sind jedoch zahlreiche Ausgestaltungen und Abwandlungen des erfindungsgemässen Verfahrens und der erfindungsgemässen Vorrichtung und verschiedene Anwendungen möglich, ohne dass dadurch der Erfindungsgedanke verlassen wird.

**Patentansprüche**

1. Verfahren zum Messen von Remissionen, die vom Messfeld (R) einer remittierenden Fläche remittiert werden, wobei sich die Strahlenbündel von mehr als einem Sender (S1, S2) auf dem Messfeld wenigstens teilweise überlagern und ein Empfänger (E) ein Teilbündel des remittierten Strahlenbündels aufnimmt, dadurch gekennzeichnet, dass sich die Strahlenbündel der Sender (S1, S2) auf dem Messfeld (R) derart überlagern, dass in einem bestimmten Arbeitsbereich des Abstandes (t) zwischen dem Messfeld (R) einerseits und den Sendern bzw. dem Empfänger (E) andererseits die vom Empfänger aufgenommene Intensität im wesentlichen unabhängig vom genannten Abstand (t) ist.

2. Verfahren nach 1, dadurch gekennzeichnet, dass die sich auf dem Messfeld überlagernden Strahlenbündel im wesentlichen symmetrisch zur Empfangsstrahlenbündelachse verlaufen.

3. Verfahren nach Anspruch 1 oder 2, dadurch gekennzeichnet, dass die Senderstrahlenbündelachsen zur Empfangsstrahlenbündelachse einen Winkel von $0 < \alpha \leq 90°$ aufweisen.

4. Verfahren nach einem der Ansprüche 1 bis 3, dadurch gekennzeichnet, dass die Sender ringförmig um die Empfangsstrahlenbündelachse angeordnet sind.

5. Verfahren nach einem der Ansprüche 1 bis 4, dadurch gekennzeichnet, dass ein ringförmiger Sender um die Empfangsstrahlenbündelachse angeordnet ist.

6. Vorrichtung zum Messen von Remissionen, die von einer remittierenden Fläche remittiert werden, mit mehr als einem Sender (S1, S2), wobei die Sender im wesentlichen symmetrisch hinsichtlich einer Ebene, in der die Empfangsstrahlenbündelachse liegt, angeordnet sind und wobei sich die Strahlenbündel der Sender wenigstens teilweise überlagern, und mit einem Empfänger (E), dadurch gekennzeichnet, dass die Sender (S1, S2) derart angeordnet und ausgebildet sind, dass sich die Strahlenbündel der Sender (S1, S2) auf dem Messfeld (R) in der Weise überlagern, dass in einem bestimmten Arbeitsbereich des Abstands (t) zwischen dem Messfeld (R) einerseits und den Sendern bzw. dem Empfänger andererseits die vom Empfänger (E) aufgenommene Intensität im wesentlichen unabhängig vom genannten Abstand (t) ist.

7. Vorrichtung nach Anspruch 6, dadurch gekennzeichnet, dass die Senderstrahlenbündelachsen zur Empfangsstrahlenbündelachse jeweils einen im wesentlichen gleichen Winkel von $0 < \alpha \leq 90°$ aufweisen.

8. Vorrichtung nach Anspruch 6 oder 7, dadurch gekennzeichnet, dass die Senderstrahlenbündelachsen zueinander im wesentlichen parallel sind und zur Empfangsstrahlenbündelachse einen Winkel von $0 < \alpha \leq 90°$ aufweisen.

9. Vorrichtung nach einem der Ansprüche 6 bis 8, dadurch gekennzeichnet, dass wenigstens zwei Empfänger in einer Reihe angeordnet sind.

**Claims**

1. Process for measuring diffuse reflections, which are diffusely reflected from the measurement field of a diffusely reflecting surface, wherein the ray bundles from more than one transmitter (S1, S2) at least partially superimpose on the measurement field and a receiver (E) picks up a partial bundle of the diffusely reflected ray bundle, characterised in that the ray bundles of the transmitters (S1, S2) superimpose on the measurement field (R) in such a manner that in a determined working region of the distance (t) between the measurement field (R) on the one hand and the transmitters or the receiver (E) on the other, the intensity received by the receiver is substantially independent of said distance (t).

2. Process according to claim 1, characterised in that the ray bundles superimposing on the measurement field run substantially in symmetry with the receiving ray bundle axis.

3. Process according to claim 1 or 2, characterised in that the transmitter ray bundle axes comprise an angle of $0 < \alpha \leq = 90°$ to the receiver ray bundle axis.

4. Process according to one of claims 1 to 3, characterised in that the transmitters are arranged in the shape of a ring around the receiver ray bundle axis.

5. Process according to one of claims 1 to 4, characterised in that a ring-shaped transmitter is arranged around the receiving ray bundle axis.

6. Device for the measurement of diffuse reflections, which are diffusely reflected by a diffusely reflecting surface, with more than one transmitter (S1, S2), wherein the transmitters are arranged substantially symmetrically in relation to a plane in which the receiving ray bundle axis lies, and wherein the ray bundles of the transmitters at least partially superimpose, and with a receiver (E), characterised in that the transmitters (S1, S2) are arranged and designed in such a manner that the ray bundles of the transmitters (S1, S2) superimpose on the measurement field (R) in such a manner that in a determined working region of the distance (t) between the measurement field (R) on the one hand and the transmitters or the receivers on the other, the intensity received by the receiver (E) is substantially independent of said distance (t).

7. Device according to claim 6, characterised in that the transmitting ray bundle axes each comprise a substantially identical angle of $0 < \alpha \leq\ =\ 90°$ to the receiving ray bundle axes.

8. Device according to claim 6 or 7, characterised in that the transmitting ray bundle axis are essentially parallel to each other and comprise an angle of $0 < \alpha \leq\ =\ 90°$ to the receiving ray bundle axis.

9. Device according to one of claims 6 to 8, characterised in that at least two receivers are arranged in a row.

**Revendications**

1. Procédé de mesure de réflexions diffuses renvoyées par un champ de mesure (R) d'une surface réfléchissante, dans lequel les faisceaux lumineux, provenant de plus d'un émetteur (S1, S2), se superposent au moins partiellement sur le champ de mesure et un récepteur (E) capte une partie du faisceau lumineux réfléchi, caractérisé en ce que les faisceaux lumineux des émetteurs (S1, S2) sont superposés sur le champ de mesure (R) de manière que, dans un intervalle de travail défini de la distance (t) entre le champ de mesure (R) d'une part, et les émetteurs, ou le récepteur (E), d'autre part, l'intensité captée par le récepteur soit sensiblement indépendante de ladite distance (t).

2. Procédé selon la revendication 1, caractérisé en ce que les faisceaux lumineux se chevauchant sur le champ de mesure passent sensiblement symétriquement à l'axe des faisceaux lumineux de réception.

3. Procédé selon la revendication 1 ou 2, caractérisé en ce que les axes des faisceaux lumineux des émetteurs forment un angle de $0 < \alpha \leq$ 90° avec l'axe du faisceau lumineux de réception.

4. Procédé selon l'une des revendications 1 à 3, caractérisé en ce que les émetteurs sont disposés en anneau autour de l'axe du faisceau lumineux de réception.

5. Procédé selon l'une des revendications 1 à 4, caractérisé en ce qu'un émetteur en forme d'anneau est disposé autour de l'axe du faisceau lumineux de réception.

6. Dispositif de mesure de réflexions diffuses, renvoyées par une surface réfléchissante, comportant plus d'un émetteur (S1, S2), les émetteurs étant disposés de façon symétrique par rapport à un plan contenant l'axe du faisceau lumineux de réception, et les faisceaux lumineux des émetteurs se chevauchant au moins partiellement, et comportant un récepteur (E), caractérisé en ce que les émetteurs (S1, S2) sont disposés et réalisés de manière que les faisceaux lumineux des émetteurs (S1, S2) se chevauchent sur le champ de mesure (R) d'une façon telle que, dans un intervalle de travail défini de la distance (t) entre le champ de mesure (R) d'une part, et les émetteurs, ou le récepteur, d'autre part, l'intensité captée par le récepteur (E) soit sensiblement indépendante de ladite distance (t).

7. Dispositif selon la revendication 6, caractérisé en ce que les axes des faisceaux lumineux des émetteurs forment chacun, avec l'axe du faisceau lumineux de réception, sensiblement le même angle de $0 < \alpha \leq$ 90°.

8. Dispositif selon la revendication 6 ou 7, caractérisé en ce que les axes des faisceaux lumineux des émetteurs sont sensiblement parallèles entre eux et forment un angle de $0 < \alpha \leq$ 90° avec l'axe du faisceau lumineux de réception.

9. Dispositif selon l'une des revendications 6 à 8, caractérisé en ce qu'au moins deux récepteurs sont disposés en une rangée.

FIG. 1

FIG. 2

FIG. 3

FIG. 5

FIG. 6

FIG. 7

FIG. 8

# FIG. 4

**FIG. 9**

R

$t$

$\delta$

$S_e$

$E_m$

R

$S_e$  $E_m$  $S_e$

**FIG. 10**

**FIG. 11**

$S_e$

$E_m$

$S_e$

**FIG. 12**

EP max-2%

100 %

80

EP

$S'_e$  $E_m$  $t$

$S'_e$

20

$t_{opt} \pm 15\%$

$t_{opt}$

$t$